# EUROPÄISCHE PATENTSCHRIFT

(11) **EP 0 523 430 B1**
(45) Veröffentlichungstag und Bekanntmachung des Hinweises auf die Patenterteilung: **27.09.1995**
(21) Anmeldenummer: 92110904.7
(22) Anmeldetag: 27.06.1992
(51) Int. Cl.: B29C 55/16, D06C 3/02

(54) **Folienreckmaschine zum Schrumpfen von Folien**
Stretching machine for shrinking films
Machine d'étirage pour le rétrécissement de films

(30) Priorität: 16.07.1991 DE 4123476
(43) Veröffentlichungstag der Anmeldung: 20.01.1993
(73) Patentinhaber: LINDAUER DORNIER GESELLSCHAFT M.B.H, D-88131 Lindau (DE)
(72) Erfinder: Rutz, Andreas, Dr.-Ing., W-8990 Lindau/B. (DE); Langer, Rudolf, Dipl.-Ing. (FH), W-8990 Lindau/B. (DE)

(56) Entgegenhaltungen:
- EP-A- 0 486 263
- GB-A- 1 223 482

## Beschreibung

In Folienreckmaschinen werden nach dem Stand der Technik nicht-verschwenkbare Kluppen bzw. Spannteile von Kluppen verwendent, um im Einlaufbereich der Maschine die zu reckende Folie zu erfassen, in Warentransportrichtung zu transportieren und innerhalb der Behandlungszone eines Ofens zu verstrecken. Um die Folie zusätzlich nach dem Recken in Längsrichtung zu schrumpfen, ist es aus der europäischen Patentschrift 0 291 775 B1 bekannt, das Teilungsmaß der Kette zu verkürzen, um eine Schrumpfung der vorher gereckten Folienbahn zu erreichen. Die Veränderung des Teilungsmaßes der Kette ist jedoch konstruktiv aufwendig. Im übrigen muß die Kette hohe Kräfte übertragen, wodurch hochbelastete Verbindungen zwischen den Kettengliedern geschaffen werden müssen.

Der vorliegenden Erfindung liegt deshalb die Aufgabe zugrunde, eine Schrumpfeinrichtung für eine Folienreckmaschine der eingangs genannten Art so weiterzubilden, daß sie wesentlich kostengünstiger und einfacher arbeitet und die insbesondere geeignet ist, Folien, die nicht als ebenflächige Gebilde vorliegen, einen definierten Schrumpfprozeß zu unterwerfen.

Zur Lösung der gestellten Aufgabe dient die technische Lehre des Anspruchs 1.

Wesentliches Merkmal der vorliegenden Erfindung ist, daß nun erfindungsgemäß nicht mehr eine Veränderung des Teilungsmaßes der Kette vorgenommen wird, sondern daß die Kluppen selbst als Schwenkkluppen ausgebildet sind und der Schrumpf der Folie durch eine "Überfütterung" der Querrecke erzielt wird. Das bedeutet, daß der Längenunterschied zwischen einer wellig gehaltenen Folienbahn und einer ebenen Folienbahn ausgenutzt wird.

Nach der vorliegenden Erfindung wird also nicht ein ebener Einlauf der Folie in den Einlaufbereich der Maschine vorgesehen sondern die Folie wird von vornherein bereits schon im Einlaufbereich wellig erfaßt und in dieser Wellenform durch die Maschine hindurchtransportiert.

Im Bereich dieser wellenförmig erfaßten Folie erfolgt dann einmal das Aufheizen der Folie, das Recken, ein Vorfixieren und dann das Schrumpfen.
In dem Moment, wo der Schrumpfvorgang einsetzen soll, wird aus der wellig ausgebildeten Folienbahn durch die Schwenkbewegung der Kluppen eine gerade wellenarme Folienbahn gebildet. Das Folienstück zwischen den Schwenkkluppen - genauer gesagt, zwischen den Kluppentischen der einzelnen Schwenkkluppen - liegt nach dem Verschwenken der Schwenkkluppen in einer ebenen Bahn schlaufenförmig vor und dient als Schrumpfreserve.
In diesem Bereich findet dann das Schrumpfen statt.
Mit dieser speziellen Ausbildung von Schwenkkluppen zum Zwecke der Schrumpfung der Folien wird der wesentliche Vorteil erreicht, daß nun das Teilungsmaß der Kette selbst nicht mehr geändert werden muß. Dadurch ergibt sich der Vorteil einer relativ einfachen Konstruktion die hoch lastübertragend ist.
Der Schwenkmechanismus der Schenkkluppe ist einfach zu realisieren und arbeitet betriebssicher.

In einer weiteren Ausgestaltung der vorliegenden Erfindung ist vorgesehen, daß diese Art der erfindungsgemäßen Schwenkkluppe auch eine Aussteuerung (Recken) der Folie im heißesten Fixierteil erlaubt, wobei der Verstellmechanismus gut in einer beidseitig begrenzten Bahn geführt werden kann. Das bedeutet, daß eine Schwenkkluppe nach der Erfindung nicht nur zum Schrumpfen verwendet werden kann, sondern auch zum teilweisen Recken in Längsrichtung der Folie.

Für die Ausbildung der erfindungsgemäßen Spannkluppe gibt es mehrere Möglichkeiten. So ist in einer ersten bevorzugten Ausführungsform vorgesehen, daß die Folie in Art einer Wellenbahn geführt wird, was voraussetzt, daß die Schwenkkluppen in entgegengesetzte Drehrichtung zueinander verschwenkt werden.

In einer zweiten Ausgestaltung der Erfindung ist vorgesehen, daß die Folienbahn eine Art von Sägezahn-Charakteristik bekommt, was voraussetzt, daß die Schwenkkluppen in der gleichen Drehrichtung verdreht werden. Es sei angemerkt, daß es nicht notwendig ist - wie in den Zeichnungen gezeigt - jede der Spannkluppen als Schwenkkluppe auszubilden.
Es kann also beispielsweise auch nur jede zweite, dritte u.s.w. Spannkluppe als Schwenkkluppe ausgebildet sein.

Bei beiden Ausführungsformen ist charakteristisch, daß das Verschwenken der Kluppen auf relativ einfache Weise dadurch erfolgt, daß der den Kluppentisch aufweisende Kluppenteil mit einer Verstellwelle drehfest verbunden ist, welche Verstellwelle am freien Ende einen Hebel trägt, an dessen anderen Ende eine Verstellrolle angeordnet ist, die auf einer entsprechend ausgebildeten Laufbahn abrollt.

Durch die Veränderung der Führungsbahn in Höhenrichtung wird somit der Schwenkwinkel des dem Kluppentisch tragenden Kluppenteils verstellt.

Bei den vorher beschriebenen Ausführungsbeispielen ist vorausgesetzt, daß die Folienbahn im Bereich des Kluppentisches gegriffen und festgehalten wird und der Kluppentisch hierbei gerade ausgebildet ist.

In einer anderen Ausführungsform der vorliegenden Erfindung kann es zusätzlich vorgesehen sein, daß der Kluppentisch noch insich geteilt und aus zwei getrennten Teile besteht, die schwenkbar zueinander angeordnet sind. D.h. der Kluppentisch ist dann nicht ein einheitliches, für sich schwenkbares Teil, sondern besteht z.B. aus zwei im Winkel schwenkbar zueinander gelagerten Teilen, so daß auch in diesem Bereich der beiden Kluppentische noch eine weitere Vergrößerung der Einspannlänge an der Folienbahn stattfindet. Aus der einfach sägezahnförmigen oder wellenförmigen Kurve wird dann eine Kurve mit etwa doppelter Frequenz.
Ebenso ist es möglich, die Steuerung der Schwenkbewegung der einzelnen Kluppen unterschiedlich zu gestalten, wobei beispielsweise mehr als eine Führungsbahn vorhanden ist und auf welcher sich jeweils eine Verstellrolle abwälzt. Damit ist es möglich, den Kluppen unterschiedliche Schwenkwinkel zuzuordnen.
Damit kann man Schwenkbewegungen der Kluppe ausführen, die sowohl in Richtung einer Reckbewegung als auch in Richtung auf eine Schrumpfbewegung ausgestaltet sind.

In den vorher beschriebenen Ausführungsbeispielen war vorausgesetzt, daß die Verschwenkung der Kluppe über einen Hebel erfolgt, der drehfest mit dem schwenkbaren Teil der Kluppe verbunden ist und dessen Verschwenkung über eine Verstellrolle erfolgt, die sich an einer Führungsbahn abrollt.

In einer anderen Ausführungsform der vorliegenden Erfindung ist es vorgesehen, daß die Verschwenkung dieses Kluppenteils nicht über einen Hebel und eine zugeordnete Verstellrolle erfolgt, sondern daß die Verschwenkung z.B. durch eine Zahnstangen-Ritzelführung erfolgt, wobei beispielsweise dann die Verstellwelle 19 mit einem Ritzel versehen ist, welches mit
einer entsprechend verschiebbar angeordneten Zahnstange in Eingriff steht. Die Zahnstange ist dann verschiebbar im Kluppenkörper angeordnet und setzt stirnseitig wieder mit einer entsprechenden Verstellrolle auf einer Führungsbahn auf.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im Folgenden wird die Erfindung anhand von lediglich einem Ausführungsweg darstellende Zeichnung näher erläutert. Hierbei gehen aus den Zeichnungen und ihrer Beschreibung weitere erfindungswesentliche Merkmale und Vorteile der Erfindung hervor. Es zeigen:
- Fig. 1:: Schnitt durch eine Kluppe nach der Erfindung in Richtung der Linie I-I in Fig. 2,
- Fig. 2:: Schnitt durch die Kluppe nach Fig. 1 in Richtung der Linie II-II,
- Fig. 3a:: Seitenansicht einer Kluppenkette in einer Ausführung nach Fig. 1, mit einem gegensinnig verschwenkten Greifteil der Kluppen,
- Fig. 3b:: Seitenansicht einer Kluppenkette in einer Ausführung nach Fig. 1, mit einem nicht verschwenkten Greifteil der Kluppen,
- Fig. 4:: ein gegenüber Fig. 3a abgewandeltes Ausführungsbeispiel mit gleichsinnig verschwenkten Kluppengreifteilen,
- Fig. 5:: die Lage der Folienbahn mit einer Ausführung nach Fig. 3a,
- Fig. 6:: die Lage der Folienbahn mit einer Ausführung der Schwenkkluppe nach Fig. 4,

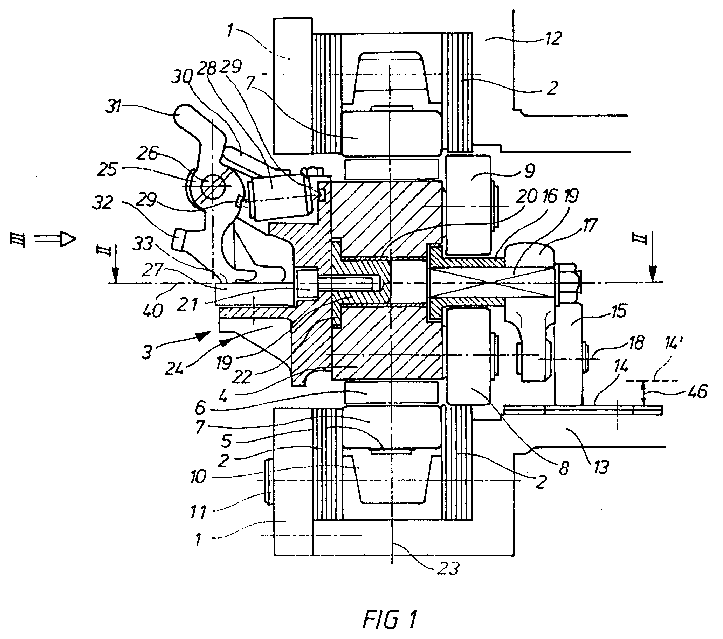

In Fig. 1 ist mit 23 die Mittenachse der Kettenführungsbahn bezeichnet. In der C-förmigen Kettenbahnführung 1 laufen hierbei jeweils eine obere und untere Laufrolle 7 in zugeordneten Führungsbahnen, wobei diese Führungsbahnen seitlich durch Führungsbänder 2 definiert sind, welche Führungsbänder jeweils mit einer Befestigung 11 an den Seiten der Kettenbahnführung 1 befestigt sind. In einer bevorzugten Ausgestaltung sind diese Führungsbänder 2 als Federbänder ausgebildet. Die oberen und unteren Laufrollen 7 rollen hierbei in zugeordneten Ausnehmungen im Bereich der Kettenbahnführungen 1 ab.
Die Kettenbahnführungen 1 sind Teil vom oberen und unteren Bahnträger 12,13, wie in Fig. 1 dargestellt.

Die Kluppe 3 besteht im wesentlichen aus einem schwenkbaren Greifteil 24 und aus einem nicht-verschwenkbar hierzu angeordneten Rollteil 4.
Das Greifteil 24 ist am Rollteil 4 dadurch schwenkbar gelagert, daß das Rollteil 4 mit einer Verstellwelle 19 durchsetzt ist, welche in einer Buchse 20 drehbar in dem Rollteil 4 gelagert ist.
Es wird noch darauf hingewiesen, daß im Rollteil 4 ein Distanzstück 16 vorhanden ist, welches Zugkräfte, die auf die Verstellwelle 19 wirken, auf das Rollteil 4 überträgt. Ferner ist an der Übergangsstelle zwischen dem feststehenden Rollteil 4 und dem schwenkbar hierzu gelagerten Greifteil 24 ein Radialansatz 22 an der Verstellwelle 19 ausgebildet, um das Greifteil 24 an dem Rollteil 4 zu führen und zu lagern.
Auf der einen Seite der Verstellwelle 19 ist hierbei drehfest ein Hebel 17 befestigt, an dessen schwenkbarem Teil ein Bolzen 18 ansetzt, auf dem drehbar eine Verstellrolle 15 gelagert ist. Diese Verstellrolle 15 läuft auf einer Laufbahn 14 ab, wobei die Laufbahn 14 zunächst die in Fig. 1 in ausgezogenen Linien dargestellte Lage einnimmt und beim Einlauf in den Schrumpfbereich der Maschine eine um den Abstand 46 erhöhte Ebene einnimmt, was in Fig. 1 mit 14' dargestellt ist.

Durch das Auflaufen der Verstellrolle 15 auf die im Abstand 46 über der unteren Laufbahn angeordnete obere Laufbahn 14' wird somit der Hebel 17 um die Verstellwelle 19 verschwenkt, wodurch das gesamte Greifteil 24 ebenfalls mit der Verstellwelle 19 mit verschwenkt wird.

Der besseren zeichnerischen Verdeutlichung halber ist in Fig. 1 die verschwenkte Lage des gesamten Greifteiles 24 dargestellt.
Die mit 14' bezeichnete Laufbahn, die im Abstand 46 über der unteren Laufbahn 14 angeordnet ist, zeigt die unverschwenkte, gerade Ausrichtung des Kluppentisches und damit des gesamten Greifteils 24.
Die Laufbahn 14', welche das Greifteil 24 in ebener Lage ausrichtet, wird somit im Schrumpfbereich angeordnet. Das Greifteil 24 besteht im wesentlichen aus einem Körper, der über die Schraube 21 drehfest mit der Stirnseite der Verstellwelle 19 verbunden ist. An der Oberseite dieses Körpers ist in einem Bolzen 26 eine Klappe 25 verschwenkbar gelagert. Die Klappe 25 besteht ihrerseits aus einem oberen Hebelteil 31 und einem unteren Hebelteil 32. Die gesamte Klappe 25 wird in Schließ- und in Öffnungsrichtung durch eine Totpunktfeder 28 vorgespannt, die dafür sorgt, daß die Klappe 25 in ihrer Öffnungsstellung federbelastet gehalten wird und ebenso in der in Fig. 1 gezeigten Schließlage. Die Totpunktfeder 28 ist hierbei zwischen zwei Schneiden 29 gelagert und ist z.B. als Biegefeder ausgebildet. Der obere Hebelteil 31 liegt in Schließstellung ohne Folie an einem greifteilfesten Anschlagbügel 30 an.
Der untere Hebelteil 32 weist ein nach unten gerichtetes Fassteil 33 auf, welches mit dem gegenüberliegend angeordneten, gerade ausgebildeten Kluppentisch 27 die Folie greift und einspannt.

Die weiteren Führungselemente zur Führung des Rollteils 4 in der Kettenführungsbahn 1 sind in an sich bekannter Weise ausgebildet. Es handelt sich hierbei um eine untere Tragrolle 8, die das Eigengewicht der Kluppe aufnimmt und die auf der Stirnseite des hinteren unteren Führungsbandes 2 abrollt und ferner um eine Steigrolle 9, die nicht notwendigerweise an jeder Kluppe befestigt ist und welche ein Hochsteigen der Kluppe 3 in der Kettenbahnführung 1 verhindern soll. Diese Steigrolle 9 rollt auf der unteren Stirnseite des hintern oberen Führungsbandes 2 (gemäß Fig. 1) ab.

Über obere und untere Kettenlaschen 6 sind die einzelnen Kluppen über den jeweiligen Kettenbolzen 5 miteinander verbunden. Der Kettenbolzen 5 ist drehbar in dem Rollteil 4 gelagert und drehfest mit den Kettenlaschen 6 verbunden.

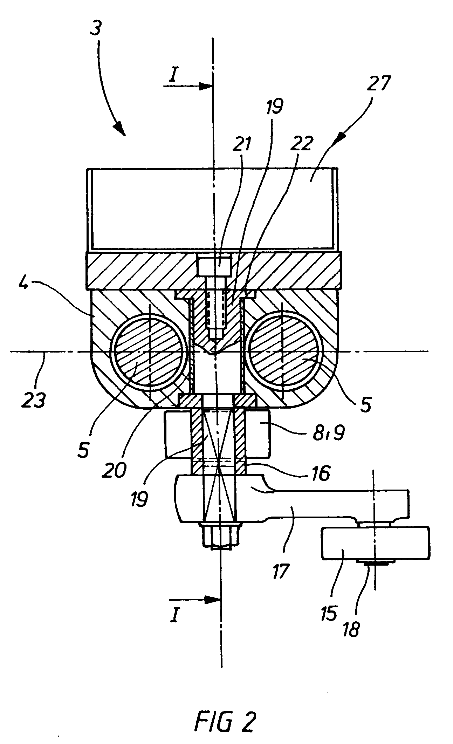

In Fig. 2 ist die Schnittdarstellung in Bezug zur Fig. 1 dargestellt. Hierbei ist erkennbar, daß insgesamt jeweils zwei Kettenbolzen 5 in an sich bekannter Weise in einem Rollteil 4 angeordnet sind, wobei die Kettenbolzen 5 drehbar in zugeordneten Buchsen im Rollteil 4 gelagert sind.

Ferner ist erkennbar, daß die Verstellwelle 19 zentrisch zwischen den Kettenbolzen 5 angeordnet ist und an ihren hinteren, der Warenbahn abgekehrten Seite den Hebel 17 mit der daran angeordneten Verstellrolle 15 trägt. Der Kluppentisch 27 ist nur schematisiert dargestellt.

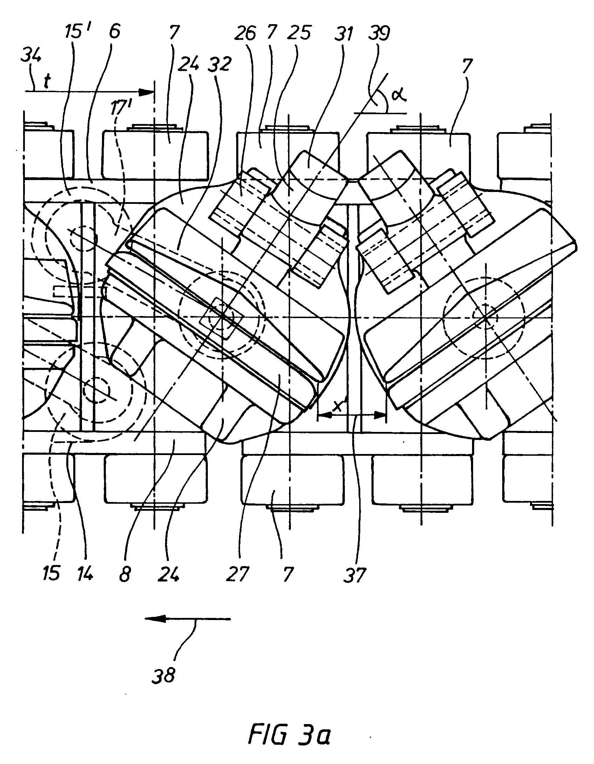

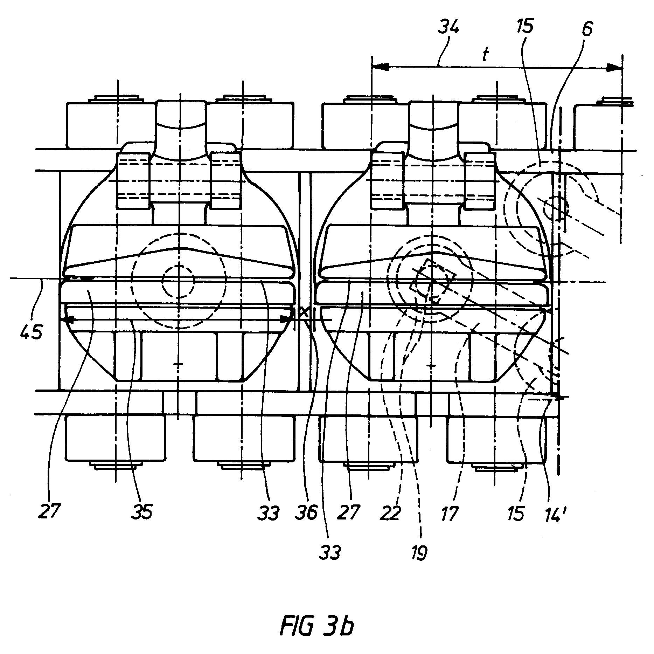

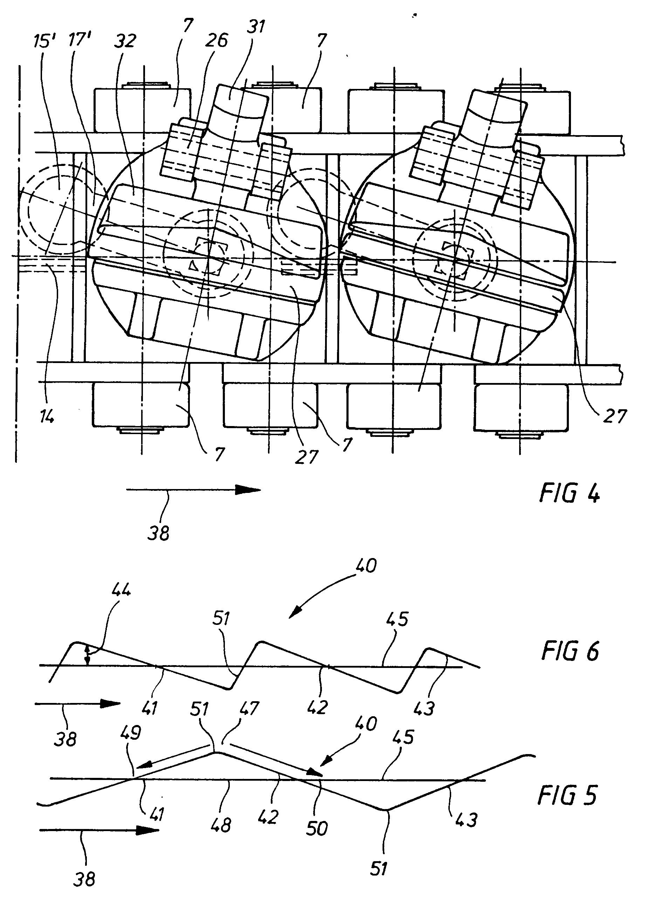

In Fig. 3a ist im Vergleich zu Fig. 4 eine abweichende Ausführungsform gezeichnet, wo dargestellt ist, daß die Greifteile 24 von benachbarten Kluppen 3 jeweils entgegengesetzt um den Schwenkwinkel 39 verschwenkt werden.
Dies wird dadurch erreicht, daß die eine Kluppe 3 einen Hebel 17' aufweist, der schräg nach oben (Fig. 3a in der Mitte) gerichtet ist und oben eine Verstellrolle 15' aufweist. Die benachbarte Kluppe weist einen nach unten gerichteten Hebel 17 auf mit einer unteren, daran angeordneten Verstellrolle 15, siehe Fig. 3b.
Der eine Hebel 17' ist hierbei in Laufrichtung 38 der Ware angeordnet, während der andere Hebel 17 mit seiner Verstellrolle 15 in Gegenrichtung zur eingezeichneten Laufrichtung 38 weist.
In Fig. 3a und 3b sind hierbei prinzipiell zwei verschiedene Funktionszustände der erfindungsgemäßen Kluppenkette dargestellt. Bei dieser Bauart müssen zur einwandfreien Funktion die Hebel 17,17' und die Laufrollen 15,15' in den Wirkebenen versetzt sein, damit es bei Betätigung nicht zur Kollision kommt. Gegenüber der graphisch übertriebenen Darstellung in Fig. 3a muß der Anlenkwinkel der Hebel an den Kluppen so ausgeführt werden, daß nur eine Führungsbahn 14 bzw. 14', siehe Fig. 3b, erforderlich ist.

Die beiden gezeichneten Kluppen in Fig. 3a zeigen die wellenförmig geklemmte Folienbahn, während die beiden in Fig. 3b gezeigten Kluppen die Normalstellung der Kluppen im Schrumpfbereich zeigt, wo diese Kluppentische eine ebene Bahn bilden und so zueinander fluchten, daß die Fassteile 33 in der Ebene einer gerade ausgebildeten Führungsbahn 45 liegen.
Wichtig hierbei ist, daß das Teilungsmaß 34 der Kette insgesamt nicht geändert wird, was ein wesentlicher Vorteil gegenüber dem Stand der Technik darstellt.

Durch die erfindungsgemäßen Maßnahmen der Verschwenkung der Greifteile 24 der Kluppen 3 wird lediglich der Abstand 36 (X) im Vergleich zu dem Abstand 37 (X') verändert.

Vor dem Einlaufen in den Schrumpfbereich entspricht der Tischabstand zu den zwei benachbarten Kluppen und damit auch die Länge der eingespannten Folie dem Abstand 37 (X'). Dieser Abstand kann, wie oben beschrieben, bereits beim Einkluppen vorhanden sein bzw. bei einer Verschwenkung innerhalb der Maschine eingestellt werden. Im Schrumpfbereich wird dieser Abstand 37 (X') auf den Abstand 36 (X) vermindert, wodurch die Folien zwischen den benachbarten Kluppen nun entspannt ist und auf das Maß X (Abstand 36) schrumpfen kann. Die Tischlänge 35 plus den Abstand 36 (X) ergibt hierbei immer das Teilungsmaß 34. Die Tischlänge 35 plus dem Abstand 37 (X')ist dabei immer größer als das Teilungsmaß 34. Die Differenz aus beiden gibt das Maß des maximal möglichen Schrumpfes innerhalb eines Teilungsabstandes an.

Die Fig. 4 zeigt ein weiteres Ausführungsbeispiel der vorliegenden Erfindung, wo erkennbar ist, daß die Hebel 17 in Laufrichtung 38 geschleppt werden, d.h. die Verstellrollen 15 sind jeweils in Laufrichtung hinten angeordnet.
Hierbei rollen also die Laufrollen 15 auf einer gemeinsamen Laufbahn 14 ab, während in Fig. 3a bei den unterschiedlich verschwenkten Kluppen zwei unterschiedliche Laufbahnen 14 vorhanden sein können.
Ebenso ist es aber in Fig. 3a und 3b möglich, eine einheitliche Laufbahn - so wie in Fig. 4 gezeigt - zu verwenden, und die Hebel 17 so anzuordnen, daß die geometrischen Verhältnisse nach Fig. 3a erreicht werden.

Wichtig bei dem Ausführungsbeispiel nach Fig. 4 ist also, daß die Greifteile 24 in gleicher Richtung verschwenkt werden, während in Fig. 3a die Greifteile 24 in unterschiedliche Richtungen verschwenkt werden.

Nach dem Ausführungsbeispiel der Fig. 3a ergibt sich somit eine Folie 40, die eine wellenförmige Charakteristik aufweist - wie in Fig. 5 dargestellt - . Es sind also gerade Folienabschnitte 41,42,43 vorhanden, wobei jeder Folienabschnitt 41 - 43 definiert wird durch den gerade ausgebildeten Kluppentisch 27.

Man erkennt, daß die Folie 40 oberhalb und unterhalb einer gerade ausgebildeten Führungsbahn 45 ausgelenkt ist und hierdurch die vorher erwähnte "Überfütterung" der Folie erfolgt.
D.h. die Folie 40 wird in wellenförmigen Zustand länger ausgebildet in den Einlaufbereich der Maschine eingeführt, und im Schrumpfbereich wird dann diese wellenförmige Form der Folie 40 in eine gerade Führungsbahn 45 überführt.

Somit ist erkennbar, daß eine Längenreserve 47 der Folienbahn vorliegt, die sich aus der Differenz zwischen dem Maß 47 und der Länge 48 zwischen den Punkten 49 und 50 ergibt.
Diese Längenreserve (Differenzmaß) unterliegt der Schrumpfung.

In dem Ausführungsbeispiel nach Fig. 6, welches auf Fig. 4 Bezug nimmt, ist erkennbar, daß statt der wellenförmigen Folie 40 eine sägezahnförmige Folie 40 erreicht wird. Dies wird dadurch erzielt, daß die Kluppentische 27 alle in der gleichen Richtung geneigt sind, wie dies durch die gezeigten Folienabschnitte 41,42 symbolisiert ist. In dem Bereich der Abschnitte 51 ist die Folie frei und unterliegt dort der Schrumpfung.

In den vorher erwähnten Ausführungsbeispielen ist lediglich dargestellt, daß die Verstellrollen 15 auf entsprechenden Laufbahnen 14,14' abrollen. Es ist selbstverständlich im Rahmen der vorliegenden Erfindung möglich, diese Verstellrollen 15 in entsprechend profilierten Führungsbahnen abrollen zu lassen, um z.B. ein Abheben der Verstellrollen 15 bei auftretenden Rückstellkräften an der Folie zu vermeiden. Damit wird eine formschlüssige Führung der Verstellrollen 15 ermöglicht. Damit können Kräfte über den Hebel 17 in beiden Schwenkrichtungen übertragen werden.

### ZEICHNUNGS-LEGENDE

- 1: Kettenbahnführung
- 2: Führungsband
- 3: Kluppe
- 4: Rollteil
- 5: Kettenbolzen
- 6: Kettenlasche
- 7: Laufrollen
- 8: Tragrolle
- 9: Steigrolle
- 10: Ausnehmung
- 11: Befestigung
- 12: Bahnträger
- 13: Bahnträger
- 14: Laufbahn 14'
- 15: Verstellrolle 15'
- 16: Distanzstück
- 17: Hebel 17'
- 18: Bolzen
- 19: Verstellwelle
- 20: Buchse
- 21: Schraube
- 22: Radialansatz
- 23: Mittenachse
- 24: Greifteil
- 25: Klappe
- 26: Bolzen
- 27: Kluppentisch
- 28: Totpunktfeder
- 29: Schneide
- 30: Anschlagbügel
- 31: Hebelteil (obere)
- 32: Hebelteil (untere)
- 33: Faßteil
- 34: Teilungsmaß
- 35: Tischlänge
- 36: Abstand
- 37: Abstand
- 38: Laufrichtung
- 39: Schwenkwinkel
- 40: Folie
- 41: Folienabschnitt
- 42: Folienabschnitt
- 43: Folienabschnitt
- 44: Winkel
- 45: Führungsbahn (eben)
- 46: Abstand
- 47: Längenreserve
- 48: Länge
- 49: Punkt
- 50: Punkt
- 51: Abschnitt

## Patentansprüche

1. Folienreckmaschine zum Schrumpfen von Folien, welche an ihren Längsrändern durch im Abstand an einer Kettenbahn angeordnete, in einer Kettenbahnführung geführte aus einem Greifteil und Rollteil bestehenden Kluppen gefaßt und in Längsrichtung in der Folienreckmaschine einer Behandlung unterworfen wird, wobei eine Schrumpfung der Folienbahn durch Längenänderung des jeweiligen zwischen den Greifteilen benachbarten Kluppen liegenden Folienbereiches erfolgt,
**dadurch gekennzeichnet**, daß die Längenänderung jedes der Folienbereiche dadurch erfolgt, daß jede Kluppe (3) als Schwenkkluppe ausgebildet ist und wobei an dem Rollteil (4) der betreffenden Kluppe das Greifteil (24) um eine Achse (Verstellwelle 19) verschwenkbar ausgebildet ist, welche Achse parallel zur Ebene der Folie (40) angeordnet ist.

2. Folienreckmaschine nach Anspruch 1, **dadurch gekennzeichnet**, daß die Verschwenkung des Greifteils (24) durch einen Hebel (17) erfolgt, der mit seinem einen Ende über eine Verstellwelle (19) drehfest mit dem Greifteil (24) und mit seinem anderen Ende mit einer Verstellrolle (15) verbunden ist, die auf einer Laufbahn (14,14') abrollt und wobei die Laufbahn in unterschiedlichen Abständen (46) senkrecht zur Ebene der Führungsbahn (45) angeordnet ist.

3. Folienreckmaschine nach Anspruch 1, **dadurch gekennzeichnet**, daß die Verschwenkung des Greifteils (24) in Bezug zum Rollteil (4) durch eine Zahnstangen-Ritzel-Führung erfolgt, wobei eine drehfest mit dem Greifteil (24) verbundene Verstellwelle (19) mit einem Ritzel verbunden ist, welches mit einer als Zahnstange ausgebildeten Laufbahn (14,14') in Eingriff steht.

4. Folienreckmaschine nach Anspruch 2, **dadurch gekennzeichnet**, daß die am freien Ende des Hebels (17) angeordnete Verstellrolle (15) in Laufrichtung (38) der Folie (14) nach hinten weist.

5. Folienreckmaschine nach Anspruch 2, **dadurch gekennzeichnet**, daß die am freien Ende des Hebels (17) angeordnete Verstellrolle (15') in Laufrichtung (38) der Folie (40) nach vorne weist.

6. Folienreckmaschine nach einem der Ansprüche 1 bis 5, **dadurch gekennzeichnet**, daß die Greifteile (24) der Kluppen (3) gegensinnig zueinander verschwenkbar sind, (Fig. 3).

7. Folienreckmaschine nach einem der Ansprüche 1 bis 5, **dadurch gekennzeichnet**, daß die Greifteile (24) der Kluppen (3) gleichsinnig zueinander verschwenkbar sind, (Fig. 4).

8. Folienreckmaschine nach einem der Ansprüche 1 bis 7, **dadurch gekennzeichnet**, daß die Verstellwelle (19) in einer Buchse (20) drehbar im Rollteil (4) gelagert ist, und daß zwischen dem schwenkbaren Greifteil (20) und dem Rollteil (4) die Verstellwelle (19) einen Radialansatz (22) größeren Durchmessers aufweist.

9. Folienreckmaschine nach einem der Ansprüche 1 bis 8, **dadurch gekennzeichnet**, daß der aus dem Rollteil (4) herausragende Teil der Verstellwelle (19) in einem Distanzstück (16) gelagert ist, welches mit einem Radialansatz Zugkräfte aus der Verstellwelle auf den Rollteil (4) überträgt.

## Claims

1. Film-stretching machine for shrinking films which are gripped at their longitudinal edges by clips which are arranged spaced apart on a chain conveyor, are guided in a chain conveyor guide and comprise a gripping portion and a rolling portion, and which films are subjected to a treatment in the longitudinal direction in the film-stretching machine, a shrinking of the film web being effected by changing the length of the particular film area lying between the gripping portions of adjacent clips, characterised in that the change in length of each of the film areas is effected as a result of the fact that each clip (3) is in the form of a pivoting clip and wherein, on the rolling portion (4) of the particular clip, the gripping portion (24) is constructed to be pivotable about an axis (control shaft 19), which axis is arranged parallel to the plane of the film (40).

2. Film-stretching machine according to claim 1, characterised in that the pivoting of the gripping portion (24) is effected by a lever (17), one end of which is connected in rotationally secure manner to the gripping portion (24) by way of a control shaft (19) and the other end of which is connected to an adjusting roller (15) which rolls along a track (14, 14') and wherein the track is arranged at different distances (46) perpendicular to the plane of the guide path (45).

3. Film-stretching machine according to claim 1, characterised in that the pivoting of the gripping portion (24) relative to the rolling portion (4) is effected by means of a rack-and-pinion guide, a control shaft (19) connected in a rotationally secure manner to the gripping portion (24) being connected to a pinion which is engaged with a track (14, 14') in the form of a rack.

4. Film-stretching machine according to claim 2, characterised in that the adjusting roller (15) arranged at the free end of the lever (17) points backwards in the running direction (38) of the film (14).

5. Film-stretching machine according to claim 2, characterised in that the adjusting roller (15') arranged at the free end of the lever (17) points forwards in the running direction (38) of the film (40).

6. Film-stretching machine according to any one of claims 1 to 5, characterised in that the gripping portions (24) of the clips (3) are pivotable in opposite directions to one another, (Figure 3).

7. Film-stretching machine according to any one of claims 1 to 5, characterised in that the gripping portions (24) of the clips (3) are pivotable in the same direction as one another, (Figure 4).

8. Film-stretching machine according to any one of claims 1 to 7, characterised in that the control shaft (19) is rotatably mounted in a bush (20) in the rolling portion (4), and in that, between the pivotable gripping portion (20) and the rolling portion (4), the control shaft (19) has a radial shoulder (22) of relatively large diameter.

9. Film-stretching machine according to any one of claims 1 to 8, characterised in that the portion of the control shaft (19) projecting from the rolling portion (4) is mounted in a spacer piece (16) which, with a radial shoulder, transfers tensile forces from the control shaft to the rolling portion (4).

## Revendications

1. Machine d'étirage pour le rétrécissement ou la rétraction de feuilles minces (ou de films), les feuilles minces étant saisies sur leurs bords longitudinaux par des pinces constituées d'une pièce de saisie et d'une pièce de roulement, disposées à l'écart d'un transporteur à chaîne, guidées dans un dispositif de guidage de transporteur à chaîne, et soumises à un traitement dans le sens longitudinal dans la machine d'étirage pour feuilles minces, une rétraction de la bande de feuilles minces s'effectuant par la modification de longueur de chaque zone de feuille mince située entre les parties de saisie de pinces voisines, machine caractérisée en ce que la modification de longueur de chacune des zones de la feuille mince s'effectue grâce au fait que chaque pince (3) a une conformation de pince pivotante, et la partie de saisie (24) étant conformée de manière à pouvoir pivoter contre la partie de roulement (4) de la pince concernée sur un axe (axe de déplacement 19), lequel axe est disposé parallélement au plan de la feuille mince (40).

2. Machine d'étirage de feuilles minces selon la revendication 1, caractérisée en ce que le pivotement de la pièce de saisie (24) s'effectue au moyen d'un levier (17) qui est relié de façon fixe en rotation à la pièce de saisie (24) par l'une de ses extrémités, par l'intermédiaire d'un axe de déplacement (19) et qui est relié par son autre extrémité à un rouleau de déplacement (15) qui roule sur une piste (14, 14'), la piste étant disposée avec des écarts différents (46) perpendiculairement au plan de la piste de guidage (45).

3. Machine d'étirage de feuilles minces selon la revendication 1, caractérisée en ce que le pivotement de la pièce de saisie (24) par rapport à la pièce de roulement (4) s'effectue au moyen d'un guidage à crémaillère et pignon, un axe de déplacement (19) doté d'un pignon étant relié de façon fixe en rotation à la pièce de saisie, lequel pignon engrène dans une piste (14, 14') conformée en crémaillère.

4. Machine d'étirage de feuilles minces selon la revendication 2, caractérisée en ce que le rouleau (15) disposé à l'extrémité libre du levier (17) est orienté vers l'arrière, vu par rapport au sens de déplacement (38) de la feuille mince (14).

5. Machine d'étirage de feuilles minces selon la revendication 2, caractérisée en ce que le rouleau de déplacement (15') disposé à l'extrémité libre du levier (17) est orienté vers l'avant, vu par rapport au sens de déplacement (38) de la feuille mince (40).

6. Machine d'étirage de feulles minces selon les revendications 1 à 5, caractérisée en ce que les pièces de saisie (24) des pinces (3) peuvent êre déplacées par pivotement en sens inverse l'une par rapport à l'autre (figure 3).

7. Machine d'étirage de feuilles minces selon l'une des revendications 1 à 5, caractérisée en ce que les pièces de saisie (24) des pinces (3) peuvent être déplacées par pivotement dans le même sens l'une par rapport à l'autre, (figure 4).

8. Machine d'étirage de feuilles minces selon l'une des revendications 1 à 7, caractérisée en ce que l'axe de déplacement (19) est monté dans la pièce de roulement (4) de façon rotative dans une douille (20) et en ce qu'entre la pièce de saisie (24) et la pièce de roulement (4) l'axe de déplacement (19) présente un appendice radial (22) de plus grand diamètre.

9. Machine d'étirage de feuilles minces selon l'une des revendications 1 à 8, caractérisée en ce que la partie de l'axe de déplacement (19) qui dépasse de la pièce de roulement (4) est montée dans une pièce de maintien à distance (16) qui transmet, au moyen d'un appendice radial, des forces de traction de l'axe de déplacement à la pièce de roulement (4).
